# EUROPÄISCHE PATENTSCHRIFT

(11) **EP 1 190 541 B1**
(45) Veröffentlichungstag und Bekanntmachung des Hinweises auf die Patenterteilung: **22.12.2004**
(21) Anmeldenummer: 00952871.2
(22) Anmeldetag: 26.06.2000
(51) Int. Cl.: H04L 25/02

(54) **SCHALTUNGSANORDNUNG UND VERFAHREN ZUR GALVANISCH GETRENNTEN BREITBAND-ÜBERTRAGUNG**
CIRCUIT AND METHOD FOR GALVANICALLY ISOLATED BROADBAND TRANSMISSION
CIRCUIT ET PROCEDE DE TRANSMISSION LARGE BANDE A ISOLATION GALVANIQUE

(30) Priorität: 25.06.1999 DE 19929231
(43) Veröffentlichungstag der Anmeldung: 27.03.2002
(73) Patentinhaber: SIEMENS AKTIENGESELLSCHAFT, 80333 München (DE)
(72) Erfinder: KLEIN-REESINK, Ludger, D-48691 Vreden (DE)
(86) Internationale Anmeldenummer: PCT/DE2000/002068
(87) Internationale Veröffentlichungsnummer: WO 2001/001645

(56) Entgegenhaltungen:
- DE-A- 19 610 248
- WARD R: "AVOIDING THE PITFALLS IN SERIAL DIGITAL SIGNAL DISTRIBUTION" SMPTE JOURNAL,US,SMPTE INC. SCARSDALE, N.Y, Bd. 102, Nr. 1, 1993, Seiten 14-23, XP000335939 ISSN: 0036-1682
- PATENT ABSTRACTS OF JAPAN vol. 008, no. 217 (E-270), 4. Oktober 1984 (1984-10-04) & JP 59 101949 A (FUJI FUAKOMU SEIGIYO KK;OTHERS: 01), 12. Juni 1984 (1984-06-12)
- P.HOROWITZ & W.HILL: "The Art of Electronics" 1997 , CAMBRIDGE UNIVERSITY PRESS , USA XP002152585 Abbildungen 9.31,9.32,9.34

## Beschreibung

Die Erfindung betrifft eine Anordnung zur galvanischen Trennung von Systemen mit Breitband-Übertragung.

Die Erfindung betrifft außerdem ein Verfahren zur galvanischen Trennung von Systemen mit Breitband-Übertragung.

Da die Anforderungen an die Geschwindigkeit einer Datenübertragung stetig steigen, stellt eine störungsfreie Übertragung von Daten im Zeitalter der Verschmelzung von Informationsund Kommunikationsnetzen eine Herausforderung für die auf diesem Gebiet tätigen Entwickler dar, da mit der Geschwindigkeit auch die Störanfälligkeit der übertragenen Daten zunimmt.

Eine Quelle für Fehler bei der Datenübertragung ist die durch gemeinsame Stromwege verursachte galvanische Störbeeinflussung, die sich durch Spannungsabfälle gegenüber dem gemeinsamen Masseanschluß, verursacht durch Übergangswiderstände an Anschlüssen oder Steckverbindungen, bemerkbar macht, welche sich den Datensignalen überlagern.

Ein Möglichkeit, die galvanische Störbeeinflussung zu vermeiden, ist die galvanische Entkopplung. Die Entkopplung erfolgt durch Vermeiden gemeinsamer Bezugsleiter und durch Potentialtrennung von Stromkreisen und wird bei der Datenübertragung durch den Einsatz von Optokopplern realisiert.

Für eine schnelle Datenübertragung wie sie heute in der Rechnertechnik üblich ist, beispielsweise bei einem "Universal Serial Bus" USB, sind Hochgeschwindigkeits-Optokoppler erforderlich.

Ein Nachteil der Hochgeschwindigkeits-Optokoppler ist der hohe Anschaffungspreis, vor allem weil zugleich auf diesem Gebiet viele konkurrierende Unternehmen tätig sind, und daher die Höhe der Produktions- und damit der Anschaffungskosten entscheidend für die Auswahl durch den Käufer und für den Erfolg der Unternehmen ist.

Ein weiterer Nachteil der Optokoppler sind die relativ großen temperatur- und spannungsabhängigen Signallaufzeiten, die vor allem bei der parallelen Übertragung von mehreren Datensignalen Schwierigkeiten verursachen, da sich die einzelnen Laufzeiten der Optokoppler im Extremfall so unterscheiden können, daß die übertragenen Datensignale nicht mehr synchron sind.

Aus der DE 196 10 248 A1 ist ein Verfahren sowie Schaltungsanordnung zur galvanischen Trennung eines Signalpfades bekannt, bei dem wenigstens eine Signaleingang und wenigstens ein diesem Signaleingang zugeordneter Signalausgang eine galvanische Trennung zwischen dem Eingang und Ausgang aufweist sowie eine Schaltungsanordnung zur galvanischen Trennung des Signalpfades.

Die der Erfindung zugrunde liegende Aufgabe ist die Realisierung einer einfachen kostengünstigen Anordnung sowie Verfahren zur galvanisch getrennten Breitband-Übertragung in Systemen zur Signalübertragung.

Diese Aufgabe wird durch die Merkmale des Patentanspruches 1 bzw. den Merkmalen des Patentanspruches 12 gelöst.

Die erfindungsgemäße Schaltungsanordnung weist eine Eingangsstufe sowie eine Ausgangsstufe auf, die durch eine Entkopplungseinrichtung entkoppelt sind.

Die Eingangsstufe enthält eine Leitung zur Übertragung eines Taktsignals, mindestens eine zweite Leitung zur Übertragung jeweils eines Datensignals, ein erstes Massepotential sowie mindestens ein erstes Mittel zur Signalverknüpfung; wobei die Anzahl der ersten Signalverknüpfungsmittel durch die Anzahl der Datensignale derart bestimmt ist, daß jedem Datensignal ein erstes Signalverknüpfungsmittel zugeordnet ist.

Die Ausgangsstufe enthält mindestens ein zweites Mittel zur Signalverknüpfung, einen den zweiten Signalverknüpfungsmitteln nachgeschalteten Filter sowie ein zweites Massepotenti al; wobei die Anzahl der zweiten Signalverknüpfungsmittel und der Filter durch die Anzahl der Datensignale derart bestimmt ist, daß jedem Datensignal ein zweites Signalverknüpfungsmittel und jeweils das dem zweiten Signalverknüpfungsmittel nachgeschaltete Filter zugeordnet ist.

Das erste Signalverknüpfungsmittel weist einen ersten Signaleingang, an dem ein Datensignal anliegt, und einen zweiten Signaleingang, an dem das Taktsignal anliegt, auf und ist derart ausgestaltet, daß ein erstes Ausgangssignal als ein dem Taktsignal überlagertes Datensignal an einem ersten Signalausgang ausgegeben wird.

Das zweite Signalverknüpfungsmittel weist einen dritten Signaleingang, an dem ein entkoppeltes erstes Ausgangssignal anliegt, und einen vierten Signaleingang, an dem ein entkoppeltes Taktsignal anliegt, auf und ist derart ausgestaltet, daß ein zweites Ausgangssignal als ein von dem entkoppelten Taktsignal befreites entkoppeltes Datensignal an einem zweiten Signalausgang ausgegeben wird, wobei dem zweiten Signalverknüpfungsmittel jeweils ein Filter nachgeschaltet ist, der im zweiten Ausgangssignal enthaltene Störimpulse wegfiltert, so daß ein drittes Ausgangssignal als ein von Störimpulsen befreites entkoppeltes Datensignal erzeugt wird.

Die Eingangsstufe und die Ausgangsstufe sind derart entkoppelt, daß das erste Massepotential von dem zweiten Massepotential galvanisch getrennt wird und das Taktsignal und das jeweils erste Ausgangssignal galvanisch getrennt übertragen werden.

Der wesentliche Vorteil der erfindungsgemäßen Schaltungsanordnung zur galvanisch getrennten Breitbandübertragung sind die geringen Signallaufzeiten, die zudem kalkulierbar sind, da sie im wesentlichen von den verwendeten Signalverknüpfungsmitteln sowie der Frequenz des Taktsignals abhängen, sowie die geringen Kosten, da Standardbauteile verwendet werden, die aufgrund ihrer Massenproduktion zu günstigen Preisen bezogen werden können. Durch die Kalkulierbarkeit der Laufzeiten ist diese Schaltungsanordnung insbesondere für die Umsetzung einer parallelen Datenübertragung einzusetzen.

Durch vorteilhafte Weiterbildung gemäß Anspruch 2 werden etwaige durch den Filter verursachte Abweichungen von der rechteckigen Form, die Daten- und Taktimpulse im allgemeinen aufweisen, rückgängig gemacht, so daß unter anderem auch eine sicherere Detektion der Datensignale ermöglicht wird.

Wesentlicher Vorteil der Weiterbildungen gemäß Anspruch 3 und 4 ist die kostengünstige Anschaffung der verwendeten logischen Verknüpfungsglieder, die zudem eine besonders einfache und platzsparende - es liegen i.a. mehrere Verknüpfungsglieder in einer integrierten Schaltung vor - Anordnung zur Realisierung der Überlagerung des Taktsignals durch das Datensignal.

Die Weiterbildung gemäß Anspruch 5 zeichnet sich ebenfalls durch niedrige Anschaffungskosten aus und spart zudem ein Negationsglied ein, wenn die ersten und zweiten Signalverknüpfungsmittel ebenfalls "XOR-Gatter" sind.

Analog zur Weiterbildung gemäß Anspruch 5 zeichnet sich die Weiterbildung gemäß Anspruch 6 ebenfalls durch niedrige Anschaffungskosten aus und spart zudem ein Negationsglied ein, wenn die ersten und zweiten Signalverknüpfungsmittel ebenfalls "XNOR-Gatter" sind.

Wesentliche Vorteile der Weiterbildung gemäß Anspruch 7 sind die kostengünstige Anschaffung der Übertrager, der reduzierte Platzbedarf der Übertrager, da es beispielsweise IC-Gehäuse gibt, die 8 Übertrager (LAN-Übertrager) beinhalten, außerdem zeichnen sie sich durch große Hochspannungsfestigkeit aus und erzeugen keine Brummspannung.

Wesentliche Vorteile der Weiterbildung gemäß Anspruch 8 sind die kostengünstige Anschaffung, da es sich bei Kondensatoren, insbesondere den für die Entkopplung notwendigen Kondensatoren, um günstige Massenprodukte handelt, und eine minimal notwendige Anzahl von Leitungen, da nur das zu entkoppelnde Signal zum galvanischen Trennen an einem ersten Anschluß des Kondensators angeschlossen werden muß und das entkoppelte Signal an einem zweiten Anschluß des Kondensators abgegriffen werden kann.

Die vorteilhafte Weiterbildung gemäß Anspruch 9 gewährleistet an den Signaleingängen der Signalverknüpfungsmittel stabile Potentiale gegenüber dem zweiten Massepotential, so daß sogar bei fehlenden Eingangssignalen und/oder instabilen Eingangssignalen stets ein definiertes und/oder stabiles Ausgangssignal am Signalausgang des Signalverknüpfungsmittels erzeugt wird.

Das durch die vorteilhafte Weiterbildung gemäß Anspruch 10 realisierte Tiefpaßfilter stellt eine einfache und kostengünstige Anordnung zum Entfernen vorhandener Störimpulse dar.

Durch die vorteilhafte Weiterbildung nach Anspruch 11 ist eine Speisung der erfindungsgemäßen Schaltungsanordnung mit einem externen Taktsignal nicht mehr notwendig, dadurch wird zum einen ein Anschluß sowie eine externe Leitung für die Zufuhr des externen Taktsignals eingespart und zum anderen ist die Toleranz und Güte des Taktsignals - im Gegensatz zu dem externen Taktsignal - bekannt, so daß die Schaltungsanordnung optimal darauf abgestimmt werden kann.

Bei dem erfindungsgemäßen Verfahren gemäß Anspruch 12 wird ein Datensignal mit einem hochfrequenten Taktsignal in einer Eingangsstufe zu einem ersten Ausgangssignal verknüpft. Dazu wird das jeweilige Datensignal dem hochfrequenten Taktsignal überlagert.

Das jeweils erste Ausgangssignal sowie das Taktsignal werden an eine Ausgangsstufe galvanisch getrennt übertragen, wobei ein erstes Massepotential der Eingangsstufe von einem zweiten Massepotential der Ausgangsstufe galvanisch getrennt werden.

Ein galvanisch getrennt übertragenes erstes Ausgangssignal und ein galvanisch getrennt übertragenes Taktsignal werden in der Ausgangsstufe zu einem zweiten Ausgangssignal verknüpft. Dazu wird das galvanisch getrennt übertragene erste Ausgangssignal von dem galvanisch getrennt übertragenen Taktsignal separiert.

Zuletzt werden in dem zweiten Ausgangssignal vorhandene Störimpulse gefiltert, so daß ein drittes Ausgangssignal als gefiltertes Datensignal erzeugt wird.

Das erfindungsgemäße Verfahren ermöglicht eine kostengünstige und einfache Realisierung einer galvanisch getrennten Übertragung von Signalen.

Vorteil der Weiterbildung nach Anspruch 13 ist das Revidieren etwaiger - durch das Verfahren verursachter- Abweichungen der Daten- und Taktimpulse von einer rechteckigen Impulsform, die Daten- und Taktsignale im allgemeinen aufweisen.

Die vorteilhaften Weiterbildungen gemäß Anspruch 14 ermöglichen eine kostengünstige Umsetzung der galvanischen Trennung.

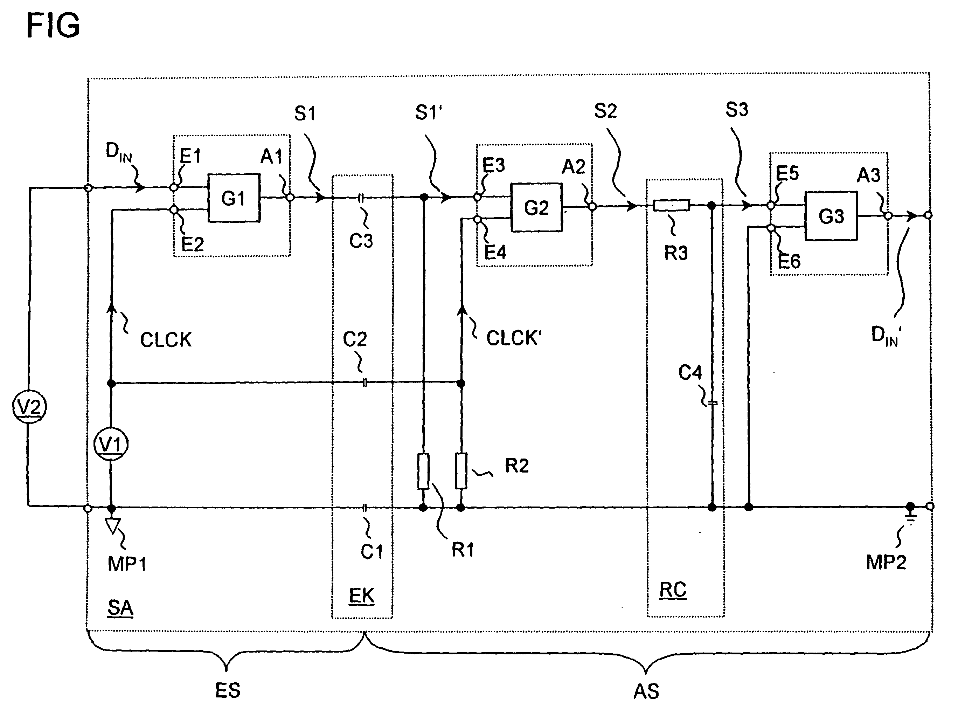

Ein Ausführungsbeispiel der Erfindung wird anhand der einzigen FIGUR erläutert. Diese zeigt:
Eine Schaltungsanordnung zur galvanisch getrennten Übertragung eines Datensignals.

In der FIGUR ist eine Schaltungsanordnung SA dargestellt, die sich in eine Eingangsstufe ES und eine Ausgangsstufe AS gliedern läßt, wobei sich die Aufteilung der Eingangsstufe ES und der Ausgangsstufe AS durch eine galvanische Trennung, die durch eine Entkopplungseinrichtung EK erfolgt, ergibt. Aufgrund dieser galvanischen Trennung weist die Eingangsstufe ein erstes Massepotential MP1 und die Ausgangsstufe AS ein galvanisch getrenntes zweites Massepotential MP2 auf.

Die Schaltungsanordung SA dient zur galvanisch getrennten Übertragung eines Datensignals D_{IN}, das von einer - in Bezug auf Schaltungsanordnung - externen Signalquelle V1 erzeugt wird. Dazu wird das Datensignal D_{IN} der Eingangsstufe ES zugeführt und dort durch ein Exklusiv-Oder-Gatter (XOR-Gatter) G1 mit.einem hochfrequenten Taktsignal CLCK verknüpft, so daß an einem ersten Signalausgang A1 des Gatters G1 ein erstes Ausgangssignal S1 ausgegeben wird, das einem dem hochfrequenten Taktsignal überlagerten Datensignal entspricht; d.h. das Datensignal D_{IN} wird mit dem hochfrequenten Taktsignal CLCK moduliert, wobei das Taktsignal CLCK die Rolle der aus der Signaltheorie bekannten Trägerfrequenz einnimmt.

Das hochfrequente Taktsignal CLCK wird von einem Generator erzeugt, der Teil der Eingangsstufe ES ist (interne Signalquelle). Alternativ kann die Eingangsstufe auch so ausgestaltet sein, daß das Taktsignal CLCK von einer externen Signalquelle erzeugt und der Eingangsstufe ES zugeführt wird.

Die in der Zeichnung dargestellte Entkopplungseinrichtung EK setzt sich aus drei Kondensatoren C1, C2 und C3 zusammen, wobei der Kondensator C1 das erste Massepotential MP1 von dem zweiten Massepotential MP2, der Kondensator C2 das Taktsignal CLCK von der Ausgangsstufe AS und der Kondensator C3 das erste Ausgangssignal S1 von der Ausgangsstufe AS galvanisch trennt, indem der jeweilige Kondensator C1, C2 oder C3 zwischen die zu trennenden Seiten geschaltet wird. Dadurch wird gewährleistet, daß das Taktsignal CLCK sowie das erste Ausgangssignal S1 galvanisch getrennt an die Ausgangsstufe AS übertragen werden.

Bei den eingesetzten Kondensatoren handelt es sich beispielsweise um Keramikkondensatoren, die wegen ihrer Hochspannungsfestigkeit besonders geeignet sind.

Alternativ können zur Realisierung der galvanischen Trennung von Eingangsstufe ES und Ausgangsstufe AS induktive Übertrager eingesetzt werden, beispielsweise LAN-Übertrager, die sich für Übertragung mit hoher Geschwindigkeit besonders eignen; wobei an der Primärseite eines ersten Übertragers das erste Massepotential MP1 und das erste Ausgangssignal S1 und an der Sekundärseite ein dritter Signaleingang E3 und das zweite Massepotential MP2 angeschlossen sind sowie an der Primärseite eines zweiten Übertragers das erste Massepotential MP1 und das Taktsignal CLCK und an der Sekundärseite ein vierter Signaleingang E4 und das zweite Massepotential MP2 angeschlossen sind.

Durch den ersten und zweiten Übertrager wird sowohl das erste Massepotential MS1 vom zweiten Massepotential MS2 als auch das Taktsignal CLCK sowie das erste Ausgangssignal S1 von der Ausgangsstufe AS galvanisch getrennt und dadurch eine galvanisch getrennte Übertragung des Taktsignals CLCK sowie des ersten Ausgangssignals von Ausgangsstufe AS realisiert.

Die Ausgangsstufe weist ein zweites XOR-Gatter auf, an dessen dritten Signaleingang E3 das galvanisch getrennt übertragene erste Ausgangssignal S1' und dessen vierten Signaleingang E4 das galvanisch getrennt übertragene Taktsignal CLCK' anliegen, wobei das zweite XOR-Gatter G2 durch Verknüpfung des galvanisch getrennt übertragenen ersten Ausgangssignals S1' und des galvanisch getrennt übertragenen Taktsignals CLCK' am zweiten Signalausgang A2 ein zweites Ausgangssignal S2 erzeugt. Da das erste Ausgangssignal S1 eine Überlagerung des Taktsignals CLCK durch das Datensignal D_{IN} ist, wird beim ersten Ausgangssignal S1 durch Separieren des galvanisch getrennt übertragenen Taktsignals CLCK' von dem Datensignal D_{IN} ein zweites Ausgangssignal S2 als ein galvanisch getrennt übertragenes Datensignal erzeugt.

Das zweite XOR-Gatter G2 gewährleistet außerdem ein Synchronisieren von Signalen der Eingangsstufe ES und der Ausgangsstufe AS und gleicht etwaige Abweichungen von einer rechtekkigen Impulsform, die die Signale im allgemeinen aufweisen, aus, da XOR-Gatter Ausgangssignale mit rechteckiger Impulsform erzeugen.

Damit gewährleistet ist, daß am zweiten Signalausgang A2 stets ein stabiles Ausgangssignal S2 - unabhängig davon ob Eingangssignale anliegen oder nicht - ausgegeben wird, ist zwischen dem dritten Signaleingang E3 und dem zweiten Massepotential MP2 ein erster Widerstand R1 sowie dem vierten Signaleingang E4 und dem zweiten Massepotential MP2 ein zweiter Widerstand R2 geschaltet. Diese sogenannte Pull-Down-Widerstände sorgen für ein definiertes Potential an den Signaleingängen E3 sowie E4 und damit auch am zweiten Signalausgang A2.

Das Weglassen der Pull-Down-Widerstände oder alternative Beschaltungen, die für eine stabiles Ausgangssignal sorgen, sind ebenfalls denkbar.

Um aus dem zweiten Ausgangssignal S2 einen Anteil, der das galvanisch getrennt übertragene Datensignal darstellt, von etwaigen im zweiten Ausgangssignal S2 enthaltenen Störimpulsen, die durch etwaige unterschiedliche Schaltschwellen an dem dritten Signaleingang E3 und dem vierten Signaleingang E4 verursacht werden, zu filtern, wird das zweite Ausgangssignal S2 einem Filter RC, der ebenfalls Teil der Ausgangsstufe AS ist, zugeführt.

Der Filter RC stellt einen Tiefpaß dar, der aus einer bekannten Zusammenschaltung von einem dritten Widerstand R3 und einem vierten Kondensator C4 aufgebaut ist. Der Widerstandswert sowie der Kapazitätswert des Kondensators sind dabei so dimensioniert, daß die zum galvanisch getrennt übertragenen Datensignal vergleichsweise hochfrequenten Störimpulse aus dem zweiten Ausgangssignal herausgefiltert werden, so daß ein drittes Ausgangssignal S3 zwischen dem dritten Widerstand R3 und dem vierten Kondensator C4 anliegt.

Alternativ zur Realisierung des Filters RC durch einen Tiefpaß aus Widerstand und Kondensator, kann auch eine geeignete Zusammenschaltung von Widerstand und Spule oder die Verwendung von integrierten geeigneten Filterbausteinen die gleiche Wirkung realisieren.

Da durch das Filtern im allgemeinen Abweichungen von der rechteckigen Impulsform der Signale entstehen können, ist dem zweiten XOR-Gatter G2 ein drittes XOR-Gatter G3 nachgeschaltet, das an einem dritten Signalausgang A3 ein wiederhergestelltes Datensignal D_{IN}' ausgibt.

Dazu ist das dritte XOR-Gatter derart dem Filter RC nachgeschaltet, daß das dritte Ausgangssignal S3 an einen fünften Signaleingang E5 sowie das zweite Massepotential MP2 an einen sechsten Signaleingang E6 des dritten XOR-Gatters G3 angelegt wird.

Das dargestellte dritte XOR-Gatter G3 ist ebenfalls Teil der Ausgangsstufe AS. Es ist jedoch auch möglich, das dritte XOR-Gatter G3 in eine externe Beschaltung, an die die Ausgangsstufe AS angeschlossen ist, zu verlagern; d.h. die Ausgangsstufe auch ohne das dritte XOR-Gatter G3 zu realisieren.

Alternativ zu den XOR-Gattern G1 bis G3 können auch andere logische Gatter, beispielsweise XNOR-Gatter, oder andere schaltungstechnische Anordnungen, die die gleichen Eigenschaften haben, verwendet werden.

Die erfindungsgemäße Schaltungsanordnung SA zeichnet sich insbesondere dadurch aus, daß sie im besonderem Maße für eine parallele galvanisch getrennte Datenübertragung geeignet ist. Charakteristisch für die parallele Datenübertragung ist das Vorhandensein mehrerer Datensignale, die parallel Übertragen werden sollen.

Um eine übersichtliche Darstellung der erfindungsgemäßen Schaltungsanordnung SA zu ermöglichen, ist aber nur der Sonderfall der galvanisch getrennten Übertragung eines Datensignals dargestellt, da für jedes weitere Datensignal - der Erfindung entsprechend - einzelne Elemente der Schaltungsanordnung SA vielfach vorhanden sein müssen. Die notwendige Anzahl der einzelnen Elemente in Abhängigkeit von der Anzahl n der Datensignale soll in der folgenden Tabelle gezeigt werden:

**Tabelle 1**

| | | | | | | | | | | |
|---|---|---|---|---|---|---|---|---|---|---|
| Element | V2 | G1 | MP1 | EK (C1;C2;C3) | R1 | R2 | G2 | RC (R3;C4) | G3 | MP2 |
| Anzahl | n | n | 1 | 1 (1;1;n) | n | n | n | n (n;n) | n | 1 |

Aus der Tabelle 1 ist ersichtlich, daß für die Realisierung der Entkopplungseinrichtung EK n+2 Kondensatoren Cl...Cn+2 (Entkopplungselemente) notwendig sind, für eine Realisierung der Entkopplungseinrichtung EK mittels induktiver Übertrager sind dagegen nur n+1 induktive Übertrager (Entkopplungselemente) notwendig, weil das erste Massepotential MP1 und das zweite Massepotential MP2 bereits durch den zur induktiven Übertragung erforderlichen Anschluß an die induktiven Übertrager voneinander galvanisch getrennt sind, dagegen bei der Realisierung der Entkopplungseinrichtung EK durch Kondensatoren zur kapazitiven Übertragung jeweils nur das galvanisch getrennt zu übertragende Signal an einen Kondensator C2, C3,..,Cn+2 angeschlossen wird, so daß für die galvanische Trennung des ersten Massepotentials MP1 und des zweiten Massepotentials MP2 ein zusätzlicher Kondensator C1 benötigt wird.

## Patentansprüche

1. Schaltungsanordnung (SA) zur galvanisch getrennten Breitband-Übertragung mit folgenden Merkmalen:
a) Eine Eingangsstufe (ES) weist mindestens ein erstes Mittel zur Signalverknüpfung (G1), eine erste Leitung zur Übertragung eines Taktsignals (CLCK) und mindestens eine zweite Leitung zur Übertragung jeweils eines Datensignals (D_{IN}) sowie einen Anschluß an ein erstes Massepotential (MP1) auf,
b) eine Ausgangsstufe (AS) weist mindestens ein zweites Mittel zur Signalverknüpfung (G2), einen den zweiten Signalverknüpfungsmitteln (G2) nachgeschalteten Filter (RC) sowie einen Anschluß an ein zweites Massepotential (MP2) auf,
c) eine Entkopplungseinrichtung (EK), die die Eingangsstufe (ES) von der Ausgangsstufe (AS) entkoppelt,
d) das erste Signalverknüpfungsmittel (G1) weist einen ersten Signaleingang (E1), an dem ein Datensignal (D_{IN}) anliegt, und einen zweiten Signaleingang (E2), an dem ein hochfrequentes Taktsignal (CLCK) anliegt, auf und ist derart ausgestaltet, daß ein erstes Ausgangssignal (S1) als ein dem Taktsignal (CLCK) überlagertes Datensignal an einem ersten Signalausgang (A1) ausgegeben wird,
e) das zweite Signalverknüpfungsmittel (G2) weist einen dritten Signaleingang (E3), an dem ein entkoppeltes erstes Ausgangssignal (S1') anliegt, und einen vierten Signaleingang (E4), an dem ein entkoppeltes Taktsignal (CLCK') anliegt, auf und ist derart ausgestaltet, daß ein zweites Ausgangssignal (S2) als ein vom entkoppelten Taktsignal (CLCK') separiertes entkoppeltes Datensignal an einem zweiten Signalausgang (A2) ausgegeben wird, wobei am zweiten Signalausgang (A2) stets definierte und/oder stabile Signale ausgegeben werden,
f) dem zweiten Signalverknüpfungsmittel (G2) ist der Filter (RC) nachgeschaltet, der zum Wegfiltern von im zweiten Ausgangssignal (S2) enthaltenen Störimpulsen derart ausgestaltet ist, daß ein drittes Ausgangssignal (S3) als ein gefiltertes entkoppeltes Datensignal erzeugt wird,
g) die Eingangsstufe (ES) und Ausgangsstufe (AS) sind durch die Entkopplungseinrichtung (EK) derart entkoppelt, daß das erste Massepotential (MP1) von dem zweiten Massepotential (MP2) galvanisch getrennt wird und das Taktsignal (CLCK) und das erste Ausgangssignal (S1) von der Eingangsstufe (ES) zu der Ausgangsstufe (AS) galvanisch getrennt übertragen werden.

2. Schaltungsanordnung (SA) nach dem Anspruch 1, **dadurch gekennzeichnet, daß**
die Ausgangsstufe (AS) mindestens ein drittes Mittel zur Signalverknüpfung (G3) aufweist, wobei dem Filter (RC) eins der dritten Signalverknüpfungsmittel (G3) nachgeschaltet ist und wobei das dritte Ausgangssignal (S3) an einem fünften Signaleingang (E5) des dritten Signalverarbeitungsmittels (G3) und das zweite Massepotential an einem sechsten Signaleingang (E6) des dritten Signalverarbeitungsmittels (G3) anliegen, wobei daß dritte Signalverknüpfungsmittel (G3) derart ausgestaltet ist, daß Impulse des dritten Ausgangssignals (3) zur Erzeugung jeweils des wiederhergestellten Datensignals (D_{IN}') in eine rechteckige Form zurückgewandelt und an einem dritten Signalausgang (A3) ausgegeben werden.

3. Schaltungsanordnung (SA) nach Anspruch 1 oder 2, **dadurch gekennzeichnet, daß**
das erste Signalverknüpfungsmittel (G1) und das zweite Signalverknüpfungsmittel (G2) Antivalenz-Gatter "XOR-Gatter" sind.

4. Schaltungsanordnung (SA) nach Anspruch 1 oder 2, **dadurch gekennzeichnet, daß**
das erste Signalverknüpfungsmittel (G1) und das zweite Signalverknüpfungsmittel (G2) Äquivalenz-Gatter "XNOR-Gatter" sind.

5. Schaltungsanordnung (SA) nach Anspruch 2 oder 3, **dadurch gekennzeichnet, daß**
das dritte Signalverknüpfungsmittel (G3) ein Antivalenz-Gatter "XOR-Gatter" ist.

6. Schaltungsanordnung (SA) nach Anspruch 2 oder 4, **dadurch gekennzeichnet, daß**
das dritte Signalverknüpfungsmittel (G3) ein Äquivalenz-Gatter "XNOR-Gatter" ist.

7. Schaltungsanordnung (SA) nach einem der vorhergehenden Ansprüche, **dadurch gekennzeichnet, daß**
die Entkopplungseinrichtung (EK) derart ausgestaltet ist, daß
a) mindestens ein erster induktiver Übertrager vorgesehen ist, wobei jeweils einer der ersten induktiven Übertrager auf seiner Primärseite dem ersten Signalausgang und dem ersten Massepotential (MP1) nachgeschaltet ist und auf seiner Sekundärseite dem dritten Signaleingang (E3) und dem zweiten Massepotential (MP2) vorgeschaltet ist,
b) auf der Primärseite eines zweiten induktiven Übertragers die erste Leitung und das erste Massepotential (MP1) angeschlossen sind und auf einer Sekundärseite des zweiten induktiven Übertragers jeweils der vierte Signaleingang (E4) und das zweite Massepotential (MP2) angeschlossen sind.

8. Schaltungsanordnung (SA) nach einem der vorhergehenden Ansprüche, **dadurch gekennzeichnet, daß**
die Entkopplungseinrichtung (EK) derart ausgestaltet ist, daß
a) mindestens ein erster Kondensator (C1) vorgesehen ist, wobei jeweils einer der ersten Kondensatoren (C1) zwischen jedem ersten Signalausgang (A1) und dem dritten Signaleingang (E3) geschaltet ist,
b) zwischen der ersten Leitung und dem zweiten Signaleingang (E2) ein zweiter Kondensator (C2) geschaltet ist,
c) zwischen dem ersten Massepotential (MP1) und zweiten Massenpotential (MP2) ein dritter Kondensator (C3) geschaltet ist.

9. Schaltungsanordnung (SA) nach einem der vorhergehenden Ansprüche, **dadurch gekennzeichnet, daß**
a) mindestens ein erster Widerstand (R1) vorgesehen ist, wobei jeweils einer der ersten Widerstände (R1) zwischen dem zweiten Signaleingang (E3) und dem zweiten Massepotential (MP2) geschaltet wird,
b) mindestens ein zweiter Widerstand (R2) vorgesehen ist, wobei jeweils einer der zweiten Widerstände (R2) zwischen dem dritten Signaleingang (E4) und dem zweiten Massepotential (MP2) geschaltet ist.

10. Schaltungsanordnung (SA) nach einem der vorhergehenden Ansprüche, **dadurch gekennzeichnet, daß**
der Filter (RC) derart ausgestaltet ist, daß
a) mindestens ein dritter Widerstand (R3) vorgesehen ist, wobei jeweils einer der dritten Widerstände (R3) nach dem zweiten Signalausgang (A2) geschaltet ist,
b) mindestens ein vierter Kondensator (C4) vorgesehen ist, wobei jeweils einer der vierten Kondensatoren (C4) zwischen dem dritten Widerstand (R3) und dem zweiten Massepotential (MP2) geschaltet ist,
c) an jedem vierten Kondensator (C4) das jeweilige dritte Ausgangssignal (S3) anliegt.

11. Schaltungsanordnung (SA) nach einem der vorhergehenden Ansprüche, **dadurch gekennzeichnet, daß**
die Eingangsstufe (ES) einen Generator (V1) zur Erzeugung des Taksignals (CLCK) aufweist, der zwischen dem ersten Massepotential (MP1) und der ersten Leitung angeschlossen ist.

12. verfahren zur galvanisch getrennten Breitband-Übertragung mit folgenden Merkmalen:
a) Ein Datensignal (D_{IN}) wird jeweils mit einem hochfrequenten Taktsignal (CLCK) in einer Eingangsstufe (ES) zu einem ersten Ausgangssignal (S1) verknüpft, indem das jeweilige Datensignals (D_{IN}) dem hochfrequenten Taktsignal (CLCK) überlagert wird, **dadurch gekennzeichnet** ,daβ
b) das erste Ausgangssignal (S1) und das Taktsignal (CLCK) werden an eine Ausgangsstufe (AS) galvanisch getrennt ü-. bertragen, wobei ein erstes Massepotential (MP1) der Eingangsstufe von einem zweiten Massepotential (MP2) der Ausgangsstufe (AS) galvanisch getrennt wird,
c) ein galvanisch getrennt übertragenes erstes Ausgangssignal (S1') und ein galvanisch getrennt übertragenes Taktsignal (CLCK') werden in der Ausgangsstufe (AS) zu einem zweiten Ausgangssignal (S2) verknüpft, so daß das Ausgangssignal (S2) als ein vom galvanisch getrennt übertragenen entkoppelten Taktsignal (CLCK') separiertes galvanisch getrennt übertragenes entkoppeltes Datensignal erzeugt wird und daß
d) das zweite Ausgangssignal (s2) derart gefiltert wird, daß jeweils ein drittes Ausgangssignal (S3) als gefiltertes Datensignal durch Entfernen von im zweiten Ausgangssignal enthaltenen Störimpulsen erzeugt wird.

13. Verfahren nach Anspruch 12, **dadurch gekennzeichnet, daß**
das dritte Ausgangssignal (S3) derart zu einem wiederhergestellten Datensignal (D_{IN}') gewandelt wird, daß Impulse des dritten Ausgangssignals (S3) in eine rechteckige Form zurückgewandelt werden.

14. Verfahren nach Anspruch 12 oder 13, **dadurch gekennzeichnet, daß**
das erste Ausgangssignal (S1) und das Taktsignal (CLCK) durch Induktion galvanisch getrennt übertragen werden, wobei die galvanische Trennung des ersten Massepotentials (MP1) von dem zweiten Massepotential (MP2) durch Induktion erfolgt.

15. Verfahren nach Anspruch 12 oder 13, **dadurch gekennzeichnet, daß**
das erste Ausgangssignal (S1) und das Taktsignal (CLCK) durch elektrische Felder galvanisch getrennt übertragen werden, wobei die galvanische Trennung des ersten Massepotentials (MP1) von dem zweiten Massepotential (MP2) durch eine Kapazität erfolgt.

## Claims

1. Circuit arrangement (SA) for directly electrically isolated broadband transmission having the following features:
a) an input stage (ES) has at least one first means for signal logic combination (G1), a first line for transmitting a clock signal (CLCK) and at least one second line for transmitting a data signal (D_{IN}) in each case, and also a connection to a first earth potential (MP1),
b) an output stage (AS) has at least one second means for signal logic combination (G2), a filter (RC) connected downstream of the second signal logic combination means (G2), and also a connection to a second earth potential (MP2),
c) a decoupling device (EK), which decouples the input stage (ES) from the output stage (AS),
d) the first signal logic combination means (G1) has a first signal input (E1), at which a data signal (D_{IN}) is present, and a second signal input (E2), at which a high-frequency clock signal (CLCK) is present, and is configured in such a way that a first output signal (S1) is output as a data signal superposed on the clock signal (CLCK) at a first signal output (A1),
e) the second signal logic combination means (G2) has a third signal input (E3), at which a decoupled first output signal (S1') is present, and a fourth signal input (E4), at which a decoupled clock signal (CLCK') is present, and is configured in such a way that a second output signal (S2) is output as a decoupled data signal separated from the decoupled clock signal (CLCK') at a second signal output (A2), defined and/or stable signals always being output at the second signal output (A2),
f) the filter (RC) is connected downstream of the second signal logic combination means (G2), which filter is configured for filtering out interference pulses contained in the second output signal (S2) in such a way that a third output signal (S3) is generated as a filtered decoupled data signal,
g) the input stage (ES) and output stage (AS) are decoupled by the decoupling device (EK) in such a way that the first earth potential (MP1) is directly electrically isolated from the second earth potential (MP2) and the clock signal (CLCK) and the first output signal (S1) are transmitted in a directly electrically isolated manner from the input stage (ES) to the output stage (AS).

2. Circuit arrangement (SA) according to Claim 1, **characterized in that**
the output stage (AS) has at least one third means for signal logic combination (G3), one of the third signal logic combination means (G3) being connected downstream of the filter (RC), and the third output signal (S3) being present at a fifth signal input (E5) of the third signal processing means (G3) and the second earth potential being present at a sixth signal input (E6) of the third signal processing means (G3), the third signal logic combination means (G3) being configured in such a way that pulses of the third output signal (3), for generating the recovered data signal (D_{IN}') in each case, are converted back into a rectangular form and output at a third signal output (A3).

3. Circuit arrangement (SA) according to Claim 1 or 2, **characterized in that**
the first signal logic combination means (G1) and the second signal logic combination means (G2) are non-equivalence gates "XOR gates".

4. Circuit arrangement (SA) according to Claim 1 or 2, **characterized in that** the first signal logic combination means (G1) and the second signal logic combination means (G2) are equivalence gates "XNOR gates".

5. Circuit arrangement (SA) according to Claim 2 or 3, **characterized in that**
the third signal logic combination means (G3) is a non-equivalence gate "XOR gate".

6. Circuit arrangement (SA) according to Claim 2 or 4, **characterized in that**
the third signal logic combination means (G3) is a equivalence gate "XNOR gate".

7. Circuit arrangement (SA) according to one of the preceding claims, **characterized in that**
the decoupling device (EK) is configured in such a way that
a) at least one first inductive transformer is provided, in each case one of the first inductive transformers being connected downstream of the first signal output and the first earth potential (MP1) on its primary side and being connected upstream of the third signal input (E3) and the second earth potential (MP2) on its secondary side,
b) the first line and the first earth potential (MP1) are connected on the primary side of a second inductive transformer and in each case the fourth signal input (E4) and the second earth potential (MP2) are connected on a secondary side of the second inductive transformer.

8. Circuit arrangement (SA) according to one of the preceding claims, **characterized in that**
the decoupling device (EK) is configured in such a way that
a) at least one first capacitor (C1) is provided, in each case one of the first capacitors (C1) being connected between each first signal output (A1) and the third signal input (E3),
b) a second capacitor (C2) is connected between the first line and the second signal input (E2),
c) a third capacitor (C3) is connected between the first earth potential (MP1) and second earth potential (MP2).

9. Circuit arrangement (SA) according to one of the preceding claims, **characterized in that**
a) at least one first resistor (R1) is provided, in each case one of the first resistors (R1) being connected between the second signal input (E3) and the second earth potential (MP2),
b) at least one second resistor (R2) is provided, in each case one of the second resistors (R2) being connected between the third signal input (E4) and the second earth potential (MP2).

10. Circuit arrangement (SA) according to one of the preceding claims, **characterized in that**
the filter (RC) is configured in such a way that
a) at least one third resistor (R3) is provided, in each case one of the third resistors (R3) being connected downstream of the second signal output (A2),
b) at least one fourth capacitor (C4) is provided, in each case one of the fourth capacitors (C4) being connected between the third resistor (R3) and the second earth potential (MP2),
c) the respective third output signal (S3) is present at each fourth capacitor (C4).

11. Circuit arrangement (SA) according to one of the preceding claims, **characterized in that**
the input stage (ES) has a generator (V1) for generating the clock signal (CLCK), said generator being connected between the first earth potential (MP1) and the first line.

12. Method for directly electrically isolated broadband transmission having the following features:
a) a data signal (D_{IN}) is in each case logically combined with a high-frequency clock signal (CLCK), in an input stage (ES) to form a first output signal (S1), by the respective data signal (D_{IN}) being superposed on the high-frequency clock signal (CLCK), **characterized in that**
b) the first output signal (S1) and the clock signal (CLCK) are transmitted in a directly electrically isolated manner to an output stage (AS), a first earth potential (MP1) of the input stage being directly electrically isolated from a second earth potential (MP2) of the output stage (AS),
c) a first output signal (S1') transmitted in a directly electrically isolated manner and a clock signal (CLCK') transmitted in a directly electrically isolated manner are logically combined in the output stage (AS) to form a second output signal (S2), so that the output signal (S2) is generated as a decoupled data signal which is transmitted in a directly electrically isolated manner and is separated from the decoupled clock signal (CLCK') which is transmitted in a directly electrically isolated manner, and **in that**
d) the second output signal (S2) is filtered in such a way that in each case a third output signal (S3) is generated as a filtered data signal by the removal of interference pulses contained in the second output signal.

13. Method according to Claim 12, **characterized in that**
the third output signal (S3) is converted into a recovered data signal (D_{IN}') in such a way that pulses of the third output signal (S3) are converted back into a rectangular form.

14. Method according to Claim 12 or 13, **characterized in that**
the first output signal (S1) and the clock signal (CLCK) are transmitted in a directly electrically isolated manner by induction, the first earth potential (MP1) being directly electrically isolated from the second earth potential (MP2) by induction.

15. Method according to Claim 12 or 13, **characterized in that**
the first output signal (S1) and the clock signal (CLCK) are transmitted in a directly electrically isolated manner by electric fields, the first ground potential (MP1) being directly electrically isolated from the second ground potential (MP2) by a capacitance.

## Revendications

1. Circuit (SA) de transmission à large bande galvaniquement séparée aux caractéristiques suivantes :
a) un étage d'entrée (ES) comporte au moins un premier moyen de combinaison de signaux (G1), une première ligne pour la transmission d'un signal d'horloge (CLCK) et au moins une seconde ligne pour la transmission à chaque fois d'un signal de données (D_{IN}) ainsi qu'une connexion à un premier potentiel de masse (MP1),
b) un étage de sortie (AS) comporte au moins un second moyen de combinaison de signaux (G2), un filtre (RC) monté en aval desdits seconds moyens de combinaison de signaux (G2) ainsi qu'une connexion à un second potentiel de masse (MP2),
c) un dispositif de découplage (EK) découplant l'étage d'entrée (ES) de l'étage de sortie (AS),
d) le premier moyen de combinaison de signaux (G1) comporte une première entrée de signaux (E1) à laquelle est appliqué un signal de données (D_{IN}), et une seconde entrée de signaux (E2) à laquelle est appliqué un signal d'horloge (CLCK) à haute fréquence, et est configuré de manière à délivrer un premier signal de sortie (S1) comme un signal de données superposé au signal d'horloge (CLCK) à une première sortie de signaux (A1 ),
e) le second moyen de combinaison de signaux (G2) comporte une troisième entrée de signaux (E3) à laquelle est appliqué un premier signal de sortie découplé (S1'), et une quatrième entrée de signaux (E4) à laquelle est appliqué un signal d'horloge découplé (CLCK'), et est configuré de manière à délivrer un second signal de sortie (S2) comme signal de données découplé séparé du signal d'horloge découplé (CLCK') à une seconde sortie de données (A2), à ladite sortie de signaux (A2) étant délivrés toujours des signaux définis et/ou stables,
f) en aval du second moyen de combinaison de signaux (G2) est monté le filtre (RC) qui pour supprimer des impulsions parasites contenues dans le second signal de sortie (S2) est configuré de manière à générer un troisième signal de sortie (S3) comme un signal de données découplé filtré,
g) l'étage d'entrée (ES) et l'étage de sortie (AS) sont découplés par le dispositif de découplage (EK) de manière à isoler galvaniquement le premier potentiel de masse (MP1) du second potentiel de masse (MP2) et à transmettre le signal d'horloge (CLCK) et le premier signal de sortie (S1), de manière galvaniquement séparée, de l'étage d'entrée (ES) à l'étage de sortie (AS).

2. Circuit (SA) selon la revendication 1, **caractérisé en ce que**
l'étage de sortie (AS) comporte au moins un troisième moyen de combinaison de signaux (G3), un desdits troisièmes moyens de combinaison de signaux (G3) étant monté en aval du filtre (RC), et le troisième signal de sortie (S3) étant appliqué à une cinquième entrée de signaux (E5) du troisième moyen de traitement de signaux (G3) et le second potentiel de masse à une sixième entrée de signaux (E6) du troisième moyen de traitement de signaux (G3),
ledit troisième moyen de traitement de signaux (G3) étant configuré de manière que des impulsions du troisième signal de sortie (S3), pour générer à chaque fois le signal de données reconstitué (D_{IN}'), sont reconverties en une forme rectangulaire et délivrées à une troisième sortie de signaux (A3).

3. Circuit (SA) selon la revendication 1 ou 2, **caractérisé en ce que**
le premier moyen de combinaison de signaux (G1) et le second moyen de combinaison de signaux (G2) sont des portes d'antivalence, des "portes XOR".

4. Circuit (SA) selon la revendication 1 ou 2, **caractérisé en ce que**
le premier moyen de combinaison de signaux (G1) et le second moyen de combinaison de signaux (G2) sont des portes d'équivalence, des "portes XNOR".

5. Circuit (SA) selon la revendication 2 ou 3, **caractérisé en ce que**
le troisième moyen de combinaison de signaux (G3) est une porte d'antivalence, une "porte XOR".

6. Circuit (SA) selon la revendication 2 ou 4, **caractérisé en ce que**
le troisième moyen de combinaison de signaux (G3) est une porte d'équivalence, une "porte XNOR".

7. Circuit (SA) selon l'une des revendications précédentes, **caractérisé en ce que**
le dispositif de découplage (EK) est configuré de manière que
a) au moins un premier transmetteur inductif est prévu, un à chaque fois desdits premiers transmetteurs inductifs étant monté du côté de son circuit primaire en aval de la sortie de signaux et du premier potentiel de masse (MP1) et du côté de son circuit secondaire en amont de la troisième entrée de signaux (E3) et du second potentiel de masse (MP2),
b) du côté du circuit primaire d'un second transmetteur inductif sont connectés la première ligne et le premier potentiel de masse (MP1) et du côté d'un circuit secondaire du second transmetteur inductif sont connectés à chaque fois la quatrième entrée de signaux (E4) et le second potentiel de masse (MP2).

8. Circuit (SA) selon l'une des revendications précédentes, **caractérisé en ce que**
le dispositif de découplage (EK) est configuré de manière que
a) au moins un premier condensateur (C1) est prévu, un à chaque fois desdits premiers condensateurs (C1) étant monté entre chaque première sortie de signaux (A1 ) et la troisième entrée de signaux (E3),
b) un second condensateur (C2) est monté entre la première ligne et la seconde entrée de signaux (E2),
c) un troisième condensateur (C3) est monté entre le premier potentiel de masse (MP1) et le second potentiel de masse (MP2).

9. Circuit (SA) selon l'une des revendications précédentes, **caractérisé en ce que**
a) au moins une première résistance (R1) est prévue, une à chaque fois desdites premières résistances (R1) étant montée entre la seconde entrée de signaux (E3) et le second potentiel de masse (MP2),
b) au moins une seconde résistance (R2) est prévue, une à chaque fois desdites secondes résistances (R2) étant montée entre la troisième entrée de signaux (E4) et le second potentiel de masse (MP2).

10. Circuit (SA) selon l'une des revendications précédentes, **caractérisé en ce que**
le filtre (RC) est configuré de manière que
a) au moins une troisième résistance (R3) est prévue, une à chaque fois desdites troisièmes résistances (R3) étant montée en aval de la seconde sortie de signaux (A2),
b) au moins un quatrième condensateur (C4) est prévu, un à chaque fois desdits quatrièmes condensateurs (C4) étant monté entre la troisième résistance (R3) et le second potentiel de masse (MP2),
c) à chaque quatrième condensateur (C4) est appliqué le troisième signal de sortie (S3) respectif.

11. Circuit (SA) selon l'une des revendications précédentes, **caractérisé en ce que**
l'étage d'entrée (ES) comporte un générateur (V1 ) destiné à générer le signal d'horloge (CLCK) et qui est connecté entre le premier potentiel de masse (MP1 ) et la première ligne.

12. Procédé de transmission à large bande galvaniquement séparée aux caractéristiques suivantes :
a) un signal de données (D_{IN}) est combiné avec un signal d'horloge (CLCK) à haute fréquence dans un étage d'entrée (ES) pour obtenir un premier signal de sortie (S1), en superposant ledit signal de données (D_{IN}) audit signal d'horloge (CLCK), **caractérisé en ce que**
b) ledit premier signal de sortie (S1 ) et ledit signal d'horloge (CLCK) sont transmis de manière galvaniquement séparée à un étage de sortie (AS), un premier potentiel de masse (MP1) de l'étage d'entrée étant galvaniquement séparé d'un second potentiel de masse (MP2) de l'étage de sortie (AS),
c) un premier signal de sortie (S1') transmis de manière galvaniquement séparée et un signal d'horloge (CLCK') transmis de manière galvaniquement séparée sont combinés dans l'étage de sortie (AS) pour obtenir un second signal de sortie (S2), de sorte que ledit signal de sortie (S2) est généré comme un signal de données découplé transmis de manière galvaniquement séparée et isolé dudit signal d'horloge (CLCK') découplé transmis de manière galvaniquement séparée, et
d) le second signal de sortie (S2) est filtré de manière à générer à chaque fois un troisième signal de sortie (S3) comme signal de données filtré, en supprimant des impulsions parasites contenues dans le second signal de sortie.

13. Procédé selon la revendication 12, **caractérisé en ce que**
le troisième signal de sortie (S3) est converti en un signal de données restitué (D_{IN}') de manière que des impulsions du troisième signal de sortie (S3) sont reconverties en une forme rectangulaire.

14. Procédé selon la revendication 12 ou 13, **caractérisé en ce que**
le premier signal de sortie (S1 ) et le signal d'horloge (CLCK) sont transmis de manière galvaniquement séparée par induction, la séparation galvanique du premier potentiel de masse (MP1) du second potentiel de masse (MP2) étant obtenue par induction.

15. Procédé selon la revendication 12 ou 13, **caractérisé en ce que**
le premier signal de sortie (S1) et le signal d'horloge (CLCK) sont transmis de manière galvaniquement séparée par des champs électriques, la séparation galvanique du premier potentiel de masse (MP1) du second potentiel de masse (MP2) étant obtenue par une capacité.
